# FASCICULE DE BREVET EUROPEEN

(11) **EP 1 012 797 B1**
(45) Date de publication et mention de la délivrance du brevet: **22.08.2001**
(21) Numéro de dépôt: 98917298.6
(22) Date de dépôt: 03.04.1998
(51) Int. Cl.: G07F 7/02

(54) **CARTE A CIRCUIT INTEGRE AVEC COMPTEUR DE GRATIFICATION ET PROCEDE DE COMPTAGE DE GRATIFICATIONS**
IC-KARTE MIT BELOHNUNGENZÄHLER UND VERFAHREN ZUM ZÄHLEN VON BELOHNUNGEN
INTEGRATED CIRCUIT CARD WITH BONUS POINT COUNTER AND PROCESS FOR COUNTING BONUS POINTS

(30) Priorité: 03.04.1997 FR 9704091
(43) Date de publication de la demande: 28.06.2000
(73) Titulaire: GEMPLUS, 13881 Gémenos Cédex (FR)
(72) Inventeur: METHLOUTI, Mounji, F-13114 Puyloubier (FR)
(86) Numéro de dépôt international: FR9800673
(87) Numéro de publication internationale: WO9844463

(56) Documents cités:
- EP-A- 0 311 495
- EP-A- 0 640 945
- EP-A- 0 736 849
- EP-A- 0 740 268
- EP-A- 0 775 990
- EP-A- 0 786 746
- WO-A-95/21428
- US-A- 5 380 991

## Description

La présente invention a pour objet une carte à circuit intégré muni de compteurs de gratifications pour mémoriser des points ou gratifications accordés au porteur de la carte lors de transactions qu'il effectue en utilisant cette carte. L'invention est plus particulièrement utilisable dans le domaine dit des applications multiples ou universelles. Ceci peut notamment être le cas avec une carte de paiement bancaire avec laquelle il est possible d'effectuer des achats divers auprès de divers fournisseurs.

Les applications de ce type permettant de gérer des compteurs de gratifications, liées par exemple à des programmes de fidélité, sont actuellement localisées soit dans des sites centraux des opérateurs, soit dans des terminaux capables de s'interfacer avec les cartes à circuit intégré. Dans certains cas, les cartes à circuit intégré comportent elles-mêmes des compteurs de gratifications. Mais dans ce cas, ces compteurs sont dédiés à une utilisation unique. Par exemple, on connaît, par la demande de brevet européen EP-A-0 311 495, un compteur de gratifications qui permet d'attribuer au porteur de la carte des gratifications proportionnelles à la durée pendant lesquelles des unités pré-payées n'ont pas été utilisées. En quelque sorte, il s'agit d'un service d'intérêt sur les unités non encore utilisées. Ce type de gratifications enregistrées dans la carte n'est bien entendu adapté qu'à la rémunération, qu'à la fidélisation, à l'égard du service que l'on peut acquérir avec cette carte, ici un service bancaire.

Quand les compteurs de fidélisation sont situés dans des sites centraux, ou encore dans des terminaux, lecteurs, capables de s'interfacer avec les cartes, on rencontre les problèmes suivants.

Dans le cas où les applications sont localisées dans des sites centraux, la détermination des unités de gratification, des points, n'est effectuée qu'en différé, et non pas immédiatement sur le point de vente. En effet, chaque terminal lecteur n'est connecté au site central qu'en soirée. Au moment de la connexion, il indique, pour un compte client donné, le nombre de points qui lui ont été attribués.

Dans le cas des applications localisées dans les terminaux, il survient un premier problème de complexité de mise en oeuvre des options de fidélisation dans la totalité des terminaux d'un parc. Dans ce cas en outre, de manière à ce que la cohabitation de l'application de fidélité avec l'application de paiement soit sécurisée, il est nécessaire de mettre en place dans les lecteurs un circuit de sécurisation dit SAM (Secure Application Modules en littérature anglo-saxonne). En particulier, la sécurité est nécessaire pour garantir le cumul des points dans la carte. Les circuits SAM doivent eux-mêmes être changés régulièrement, ce qui rend ces lecteurs chers et peu faciles à gérer.

L'invention a pour objet de remédier à ces inconvénients en préconisant un calcul des points par la carte à circuit intégré elle-même. Dans ce cas, dans l'invention, on prévoit de faire envoyer par le terminal une indication qui permet à la carte à circuit intégré d'identifier le prestataire de services ou le vendeur. A partir de cette identification, la carte à circuit intégré peut rechercher dans son programme exécutable des règles spécifiques au prestataire ou au vendeur identifié. Elle peut alors calculer pour les stocker dans un compteur spécifique, des points relatifs à ce fournisseur spécifique. Le résultat du calcul peut être stocké dans le lecteur ou, de préférence, dans la carte.

L'invention a donc pour objet une carte à circuit intégré comportant, dans le circuit intégré de la carte, un microprocesseur pour exécuter un programme d'une application avec un premier ensemble de règles, et un compteur de gratifications pour comptabiliser des gratifications résultant de l'application de ces règles, caractérisé en ce que le circuit intégré de la carte comporte une mémoire pour mémoriser le programme de l'application, en ce que le programme de l'application comporte au moins un deuxième ensemble de règles et un test, le test servant à détecter dans un message envoyé par un lecteur à la carte à circuit intégré une indication relative à un des ensembles de règles, le test servant ensuite à lancer les règles de l'ensemble détecté, le circuit intégré comportant en outre autant de compteurs de gratification différents qu'il y a d'ensembles de règles différents.

L'invention a également pour objet un procédé de comptage de points de gratification dans une carte à circuit intégré comportant, dans le circuit intégré de la carte, un microprocesseur pour exécuter un programme d'une application, caractérisé en ce que
- on mémorise dans la carte plusieurs ensembles de règles de calcul de gratifications,
- un lecteur en relation avec la carte envoie à la carte un message renseignant sur son identité,
- on détecte avec le message envoyé par le lecteur la correspondance entre cette identité reçue et un ensemble de règles,
- on lance les règles de l'ensemble détecté, et on calcule un compte de gratifications correspondant à ces règles.

L'invention sera mieux comprise à la lecture de la description qui suit à l'examen des figures qui l'accompagnent. Celles-ci ne sont données qu'à titre indicatif et nullement limitatif de l'invention. Les figures montrent :
- figure 1 : une représentation schématique d'une carte à circuit intégré munie du dispositif de l'invention ;
- figure 2 : les étapes principales du procédé de l'invention.

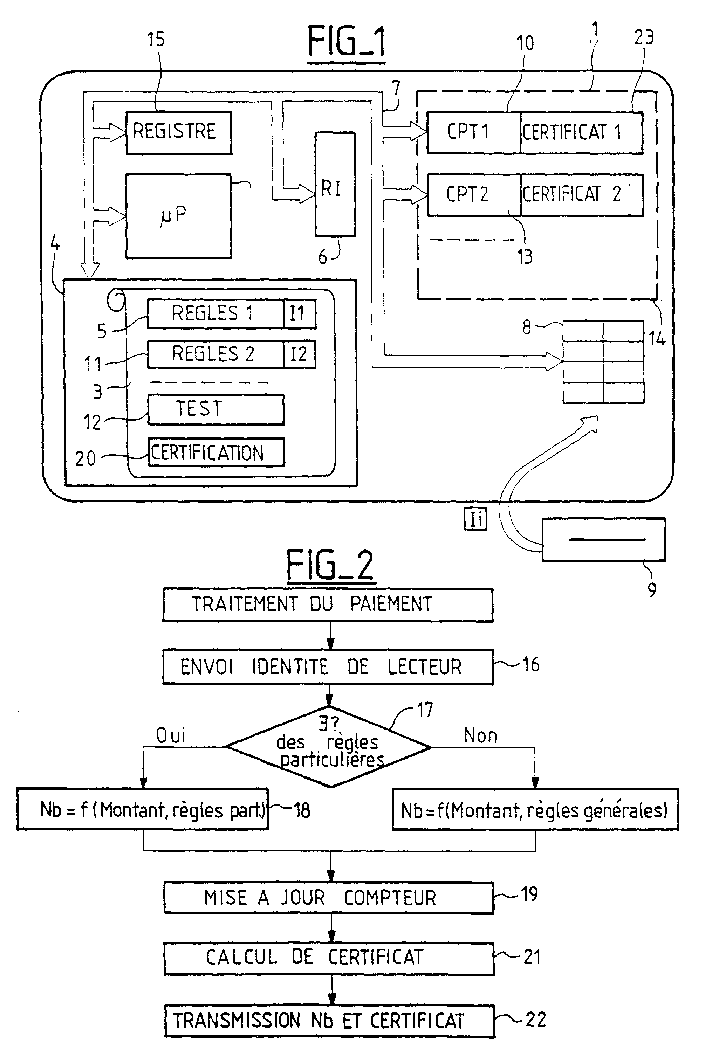

La figure 1 montre une carte 1 à circuit intégré. Le circuit intégré comporte un microprocesseur 2 susceptible d'exécuter un programme d'application. Le programme d'application est par exemple un programme 3, contenu dans la mémoire 4. Le programme 3 contient un premier ensemble 5 de règles. L'exécution de ces règles se fait en chargeant dans un registre 6 d'instruction du microprocesseur 2, par l'intermédiaire d'un bus 7 de commandes, d'adresses, et de données, les instructions adéquates. Les règles peuvent utiliser des données internes à la carte (valeur des compteurs de gratifications internes,...) et des données communiquées par le lecteur lors de la transaction initiale (ex: montant, date de la transaction, heure,...).

Le circuit intégré de la carte 1 est encore en relation par une interface 8, ici représentée symboliquement par un connecteur électrique, avec un lecteur 9. L'interface 8 est également reliée au bus 7. L'interface 8 peut comporter des moyens de liaisons autres que électrique: liaisons radioélectriques, liaisons par infra-rouges, ou autres. L'instruction que le microprocesseur 2 exécute peut provenir du lecteur 9 et avoir été chargé dans le registre d'instructions 6 par l'intermédiaire de l'interface 8 et du bus 7.

Dans une application dédiée contenue dans une carte, fournie par un prestataire de service unique, il existe un compteur 10 pour compter des points de gratification spécifiques à cette application, aux règles contenues dans l'ensemble 5.

Une des caractéristiques de l'invention est que la mémoire 4 contient, dans le programme 3, l'ensemble 5 des règles qui vont permettre de compter des gratifications, et au moins un deuxième ensemble 11 de règles, permettant de compter des gratifications d'une manière différente. Une autre caractéristique de l'invention, est la présence dans le circuit intégré de moyens 12 de test, pour reconnaître dans un message envoyé par le lecteur 9 à la carte 1, une identité, Ii, relative à un ensemble de règles. Les moyens de test sont de préférence des moyens logiciels, mais il pourraient être remplacés par un circuit, du type décodeur par exemple, qui en décodant l'identité reçue pointerait un pointeur d'instructions sur le début de l'ensemble des règles correspondant à l'identité décodée.

Recevant l'identité Ii, dans la version logicielle, le microprocesseur 2 teste d'abord pour savoir s'il existe dans le programme 3 de la mémoire 4, un ensemble de règles en correspondance avec cette identité. Une fois que l'ensemble de règles est trouvé, le sous programme 12 de test charge ces règles dans le registre instruction 6 du micro-processeur 2 et les lui fait exécuter. L'exécution de ces règles a alors pour conséquence, dans l'invention, d'incrémenter un compteur 13 spécifique aux règles détectées. Cette incrémentation peut comporter le calcul préalable de l'incrément en fonction, éventuellement, du montant de la transaction effectuée par le porteur.

Dans un exemple, les compteurs 10 ou 13 sont du type boulier et/ou enregistrés en mémoire non volatile 14 de type EEPROM dans le circuit intégré. En outre, le circuit intégré de la carte comporte un registre 15 en mémoire volatile, dans lequel peut être temporairement enregistré le compte de gratification si un compteur 10 ou 13 n'est pas présent. Ce registre 15 sert à effectuer les échanges avec le lecteur 9.

Le procédé de l'invention est représenté sur la figure 2. On commence par mémoriser dans la mémoire 4 de la carte plusieurs ensembles 5, 11 de règles de calcul de gratifications, chaque ensemble correspondant à une identité de lecteur ou de prestataire.

Lors du traitement d'un paiement correspondant à une transaction avec une carte à circuit intégré montrée sur la figure 1, le lecteur 9 est mis en relation avec la carte 1 et envoie son identité Ii à la carte 1. Dans la carte 1, on détecte une occurrence Ii = I1 ou Ii = I2, ... dans la mémoire 3, et une correspondance entre l'identité envoyée et un ensemble de règles mémorisées à la même adresse dans la mémoire 4. Quand ces règles sont trouvées, on les fait exécuter par le micro-processeur 2 de manière à obtenir le calcul des gratifications qui leur correspondent. S'il n'y a pas de règles de calcul des gratifications dans la carte, on peut choisir de faire calculer par le lecteur des gratifications avec la méthode classique: avec des règles standards de l'émetteur de la carte.

En alternative, l'identité du lecteur peut être communiquée à la carte dès la transaction de paiement et le déclenchement du processus de calcul des gratifications est enchaîné automatiquement dès la fin du traitement du paiement.

La figure 2 montre des étapes 16 à 18 qui correspondent à ces trois opérations. Par la suite bien entendu, il y a une mise à jour 19 du compteur de gratifications. Ce compteur de gratifications, selon le procédé de l'invention, peut être stocké dans la mémoire 14 ou dans le lecteur 9. S'il est stocké dans le lecteur 9, il subira l'inconvénient de ne pouvoir être dirigé au service central qu'en mode différé. Cependant, le procédé de l'invention a pour effet de supprimer ou de fortement simplifier le programme de gestion des gratifications du lecteur 9. Il a également pour effet de supprimer la nécessité de mettre en oeuvre dans le lecteur 9 un circuit de sécurisation puisque le calcul sécurisé sera effectué dans la carte.

Dans ce cas, de préférence, le programme 3 comporte un sous programme 20 de certification pour calculer en une opération 21 un certificat relatif au montant des points comptés. Le calcul du certificat est effectué d'une manière connue dans la carte en mettant en oeuvre avec le microprocesseur 2 un algorithme de certification mémorisé dans le programme 3. Puis dans une opération 22, le microprocesseur 2 peut provoquer l'envoi au lecteur 9 du nombre de points comptés et du certificat attaché à ce compte.

Le nombre de points compté peut être élémentaire et correspondre uniquement au montant de l'achat effectué préalablement et des règles particulières mises en oeuvre. Ce compte peut par ailleurs correspondre à un cumul précédent augmenté du nouveau nombre de points comptés. Dans ce cas, la carte comportera de préférence les compteurs 10 à 13 en mémoire non volatile 14. Eventuellement, le certificat calculé au cours de l'opération 21 pourra être attaché au compteur qu'il certifie: c'est à dire être enregistré à une même adresse dans la mémoire 14. Dans ce cas, le compteur comporte une zone complémentaire 23 dans laquelle le certificat est mémorisé.

Les compteurs 10 et 13 peuvent être réalisés sous une forme matérielle connue. Dans ce cas, il suffit de leur envoyer des impulsions pour qu'ils comptent les points. D'une manière préférée cependant, les compteurs 10 et 13 seront des zones de mémoire de la mémoire 14 dont la mise à jour sera effectuée par les règles correspondantes du programme 3.

Avec l'invention, on peut se passer de l'envoi systématique du compte de points au service central pour mettre à jour les comptes des points relatifs aux différents porteurs. En effet, le compte peut être fait directement dans chacune des cartes. Il n'est en plus plus nécessaire de mettre à jour les lecteurs 9. En effet, ceux-ci ne doivent être capables que de donner leur identité Ii aux cartes. Dans celles-ci, on pourra reconnaître des catégories de prestataires ou de vendeurs, et, en ayant stocké au préalable les règles adéquates, lancer les programmes correspondants.

De nombreux prestataires de service peuvent bénéficier simplement de ce système. En effet, les cartes détenues par les individus, étant changées régulièrement, il est très facile à cette occasion d'incorporer de nouvelles règles en correspondance de nouvelles identités dans leur programme 3. Il est par ailleurs également possible, à l'initiative d'un lecteur spécial de télécharger de nouveaux programmes dans celles-ci. De la même façon, on peut faire varier les règles de calcul des unités. Enfin, les règles peuvent être modifiées en fonction du type de carte, ou même carte par carte puisque les règles sont stockées à l'intérieur de celles-ci.

## Revendications

1. Carte (1) à circuit intégré comportant, dans le circuit intégré de la carte, un microprocesseur (2) pour exécuter un programme (3) d'une application avec un premier (5) ensemble de règles, et un compteur (10) de gratifications pour comptabiliser des gratifications résultant de l'application de ces règles, ledit circuit intégré de la carte comportant une mémoire (4) pour mémoriser le programme de l'application, caractérisé en ce que le programme de l'application comporte au moins un deuxième (11) ensemble de règles et un test (12), le test servant à détecter dans un message envoyé par un lecteur (9) à la carte à circuit intégré une indication (I1) relative à un des ensembles de règles, le test servant ensuite à lancer les règles de l'ensemble détecté, le circuit intégré comportant en outre autant de compteurs (10,13) de gratifications différents qu'il y a d'ensembles de règles différents.

2. Carte selon la revendication 1, caractérisée en ce que les compteurs sont du type boulier et ou enregistrés en mémoire non volatile.

3. Carte selon la revendication 1, caractérisée en ce qu'elle comporte des registres (10,13) pour enregistrer l'état du ou des compteurs.

4. Procédé de comptage de points de gratification dans une carte (1) à circuit intégré comportant, dans le circuit intégré de la carte, un microprocesseur (2) pour exécuter un programme (3) d'une application, caractérisé en ce que
- on mémorise dans la carte plusieurs ensembles (5,11) de règles de calcul de gratifications,
- un lecteur (9) en relation avec la carte (16) envoie à la carte un message renseignant sur son identité (I1),
- on détecte (17) avec le message envoyé par le lecteur la correspondance entre cette identité reçue et un ensemble de règles,
- on lance (18) les règles de l'ensemble détecté, et on fait calculer par la carte un compte de gratifications correspondant à ces règles.

5. Procédé selon la revendication 4, caractérisé en ce que
- on stocke (17) les gratifications comptées dans autant de compteurs (10,13) de gratification différents dans la carte qu'il y a d'ensembles (5,11) de règles différents.

6. Procédé selon l'une des revendications 4 ou 5, caractérisé en ce que
- on fait calculer (21) par la carte un certificat relatif aux. gratifications comptées, et
- on envoie (22) le compte de gratification et le certificat calculé à un organisme central.

7. Procédé selon l'une des revendications 4 à 6 caractérisé en ce que dans le cas ou la correspondance n'est pas établie, on lance des règles standards de l'émetteur de la carte.

## Patentansprüche

1. IC-Karte (1) mit einem Mikroprozessor (2) in der integrierten Schaltung der Karte zur Ausführung eines Programms (3) einer Applikation mit einer ersten (5) Regeleinheit, und mit einem Gratifikationszähler (10), um die aus der Applikation dieser Regeln resultierenden Gratifikationen zu zählen, wobei die besagte integrierte Schaltung der Karte einen Speicher (4) zum Speichern des Applikationsprogramms umfasst,
dadurch gekennzeichnet, dass das Applikationsprogramm mindestens eine zweite (11) Regeleinheit und einen Test (12) umfasst, wobei der Test dazu dient, in einer von einem Lesegerät (9) an die IC-Karte gesendeten Meldung eine Angabe (I1) bezüglich einer der Regeleinheiten zu detektieren, wobei der Test danach dazu dient, die Regeln der detektierten Einheit zu starten, wobei die integrierte Schaltung im übrigen so viele verschiedene Gratifikationszähler (10, 13) aufweist wie es verschiedene Regeleinheiten gibt.

2. Karte nach Anspruch 1, dadurch gekennzeichnet, dass die Zähler des Typs Abakus und/oder in einem nicht flüchtigen Speicher aufgezeichnet sind.

3. Karte nach Anspruch 1, dadurch gekennzeichnet, dass sie Register (10, 13) aufweist, um den Zustand des oder der Zähler aufzuzeichnen.

4. Zählverfahren von Gratifikationspunkten in einer IC-Karte (1), mit einem Mikroprozessor (2) in der integrierten Schaltung, um ein Programm (3) einer Applikation auszuführen, dadurch gekennzeichnet, dass
- man in der Karte mehrere Regeleinheiten (5, 11) für die Berechnung von Gratifikationen speichert,
- ein mit der Karte (16) in Verbindung stehendes Lesegerät (9) der Karte eine Meldung bezüglich seiner Identität (I1) zusendet,
- man anhand der vom Lesegerät gesendeten Meldung die Übereinstimmung zwischen dieser empfangenen Identität und einer Regeleinheit detektiert (17),
- man die Regeln der detektierten Einheit startet (18) und man durch die Karte ein diesen Regeln entsprechendes Gratifikationskonto errechnen lässt.

5. Verfahren nach Anspruch 4, dadurch gekennzeichnet, dass man
- die gezählten Gratifikationen in so vielen verschiedenen Gratifikationszählern (10, 13) in der Karte ablegt (17) wie verschiedene Regeleinheiten (5, 11) vorhanden sind.

6. Verfahren nach einem der Ansprüche 4 oder 5,
dadurch gekennzeichnet, dass
- man von der Karte eine Zertifikat bezüglich der gezählten Gratifikationen errechnen lässt (21), und
- man das Gratifikationskonto und das errechnete Zertifikat an eine Zentralstelle sendet (22).

7. Verfahren nach einem der Ansprüche 4 bis 6,
dadurch gekennzeichnet, dass man, wenn die Übereinstimmung nicht festgestellt wird, Standardregeln des Kartenausgebers startet.

## Claims

1. An integrated circuit card (1) having, in the integrated circuit of the card, a microprocessor (2) for executing a program (3) of an application with a first (5) set of rules, and a bonus counter (10) for counting bonuses resulting from the application of these rules, the said integrated circuit of the card having a memory (4) for storing the program of the application, characterised in that the program of the application contains at least one second (11) set of rules and a test (12), the test serving to detect, in a message sent by a reader (9) to the integrated circuit card, an indication (I1) relating to one of the sets of rules, the test next serving to initiate the rules in the detected set, the integrated circuit also containing as many different bonus counters (10, 13) as there are different sets of rules.

2. A card according to Claim 1, characterised in that the counters are of the abacus type and/or recorded in non-volatile memory.

3. A card according to Claim 1, characterised in that it has registers (10, 13) for recording the state of the counter or counters.

4. A method of counting bonus points in an integrated circuit card (1) having, in the integrated circuit of the card, a microprocessor (2) for executing a program (3) of an application, characterised in that
- several sets (5, 11) of bonus calculation rules are stored in the card,
- a reader (9) in relationship with the card (16) sends to the card a message giving information on its identity (I1),
- the match between this received identity and a set of rules is detected (17) with the message sent by the reader,
- the rules of the detected set are initiated (18), and the card is made to calculate a bonus count corresponding to these rules.

5. A method according to Claim 4, characterised in that
- the counted bonuses are stored (17) in as many different bonus counters (10, 13) in the card as there are different sets (5, 11) of rules.

6. A method according to one of Claims 4 or 5, characterised in that
- the card is made to calculate (21) a certificate relating to the counted bonuses, and
- the bonus count and the calculated certificate are sent (22) to a central organisation.

7. A method according to one of Claims 4 to 6, characterised in that, where the match is not established, standard rules of the card issuer are initiated.
